(19) Europäisches Patentamt
European Patent Office
Office européen des brevets

(11) **EP 2 547 905 B1**

(12) **EUROPÄISCHE PATENTSCHRIFT**

(45) Veröffentlichungstag und Bekanntmachung des Hinweises auf die Patenterteilung:
**25.02.2015  Patentblatt 2015/09**

(21) Anmeldenummer: **11787901.5**

(22) Anmeldetag: **25.11.2011**

(51) Int Cl.:
**F03D 11/00** *(2006.01)*

(86) Internationale Anmeldenummer:
**PCT/EP2011/071030**

(87) Internationale Veröffentlichungsnummer:
**WO 2012/069631 (31.05.2012 Gazette 2012/22)**

(54) **VERFAHREN ZUM BETREIBEN EINER WINDENERGIEANLAGE**

METHOD FOR OPERATING A WIND POWER PLANT

PROCEDE POUR FAIRE FONCTIONNER UNE EOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2010  DE 102010052565**

(43) Veröffentlichungstag der Anmeldung:
**23.01.2013  Patentblatt 2013/04**

(73) Patentinhaber: **Wobben Properties GmbH
26605 Aurich (DE)**

(72) Erfinder: **EDEN, Georg
26556 Westerholt (DE)**

(74) Vertreter: **Eisenführ Speiser
Patentanwälte Rechtsanwälte PartGmbB
Postfach 10 60 78
28060 Bremen (DE)**

(56) Entgegenhaltungen:
EP-A1- 1 359 321     EP-A1- 2 354 538
EP-A2- 2 112 375     DE-A1-102006 036 157

**Beschreibung**

Die vorliegende Erfindung betrifft ein Verfahren zum Betreiben einer Windenergieanlage sowie eine Windenergieanlage.

Eine Windenergieanlage mit Horizontalachsenrotor weist wenigstens eines, üblicherweise drei Rotorblätter auf, die sich bestimmungsgemäß durch den auf sie treffenden Wind um eine horizontale Achse drehen, um mittels dieser Drehbewegung elektrische Energie zu erzeugen. Trifft zu starker Wind auf die Rotorblätter, kann die Windenergieanlage - je nach Häufigkeit oder Stärke - Schaden nehmen. Solchen Belastungen durch zu starken Wind kann beispielsweise begegnet werden, indem die Rotorblätter zumindest teilweise aus dem Wind gedreht werden. Das wird auch als Pitchen bezeichnet.

Um solche oder andere Maßnahmen zur Entlastung der Windenergieanlage einleiten zu können, ist es erforderlich, entsprechende Belastungen durch starken Wind zu erfassen. Ein kontinuierlich starker und homogener Wind kann durch das Verhalten der Windenergieanlage, wie beispielsweise durch die resultierende Energieproduktion erkannt werden. Für kurzzeitige Belastungen oder auch für lokale Belastungen auf beispielsweise nur einem Rotorblatt können Sensoren zur Messung einer solchen Belastung vorgesehen sein. So werden beispielsweise Sensoren, wie Dehnungsmessstreifen zum Erfassen der Biegung jedes Rotorblattes verwendet. Hierdurch kann unmittelbar eine mit der Biegung des Rotorblattes zusammenhängende Belastung qualitativ als auch quantitativ erfasst und entsprechend ausgewertet werden, um gegebenenfalls auch Maßnahmen zur Begrenzung der Belastung zu ergreifen.

Voraussetzung hierfür ist, dass die entsprechenden Belastungssensoren präzise arbeiten und verlässliche Werte liefern. Hierzu ist auch das Kalibrieren und/oder Abgleichen des jeweiligen Sensors ganz wesentlich. Es ist üblich, dass Sensoren, wie beispielsweise ein Dehnungsmessstreifen einen dehnungsabhängigen Widerstandswert oder - je nach nachgeschalteter Auswerteelektronik - ein dehnungsabhängiges Signal liefern, wie beispielsweise eine Ausgangsspannung. Diese Werte sind dann mittels Kalibrierung und Abgleich einer zugehörigen Belastung des Rotorblattes zuzuordnen.

Eine solche Kalibrierung mit Abgleich kann sehr aufwändig und auch fehleranfällig sein, weil hierbei den gemessenen Sensorwerten zugehörige Belastungswerte zuzuordnen sind, die anderweitig aufzunehmen sind. Eine Möglichkeit eine Kalibrierung mit Abgleich vorzunehmen besteht darin, das Blatt manuell mit einer zu messenden Vergleichskraft zu ziehen, so dass die Kalibrierung anhand dieser Vergleichskraft vorgenommen wird. So kann z.B. ein Rotorblatt in einer 6:00 Stellung an seiner Spitze zum Turm hin gezogen werden, während die aufgewendete Kraft gemessen wird.

Es kommt hinzu, dass im Laufe des Betriebs der Windenergieanlage sich Zusammenhänge ändern. Dies kann durch Alterungserscheinungen sowohl der Rotorblätter als auch der Sensoren ausgelöst werden, als auch durch andere Gründe, wie beispielsweise Defekte des Sensors oder seiner Befestigung. Sofern solche Änderungen klein sind und/oder sich langsam vollziehen, besteht die Gefahr, dass sie unbemerkt bleiben.

Als Stand der Technik sei allgemein auf das Dokument DE 10 2006 036 157 A1 verwiesen.

Aufgabe der vorliegenden Erfindung ist es somit, wenigstens eines der oben beschriebenen Probleme zu beheben, zumindest zu verringern. Insbesondere soll eine Kalibrierung und ein Abgleich wenigstens eines Belastungssensors vereinfacht werden und/oder die Verlässlichkeit einer solchen Kalibrierung und/oder Abgleichs soll möglichst erhöht werden. Zumindest soll eine alternative Lösung vorgeschlagen werden.

Erfindungsgemäß wird ein Verfahren nach Anspruch 1 vorgeschlagen. Diesem Verfahren liegt eine Windenergieanlage mit Horizontalachsenrotor zugrunde. Bei einem solchen Horizontalachsenrotor ist eine im Wesentlichen horizontale Achse vorgesehen, um die sich ein oder mehrere Rotorblätter angetrieben durch den Wind drehen. Diese Achse kann auch eine leichte Schrägstellung aufweisen. Dem Fachmann ist der Begriff einer Windenergieanlage mit einem Horizontalachsenrotor, als Klassifizierung eines bestimmten Windenergieanlagentyps geläufig, insbesondere zur Abgrenzung gegen eine Windenergieanlage mit einer vertikalen Achse.

Eine solche Windenergieanlage weist einen aerodynamischen Rotor auf, der eine Nabe mit wenigstens einem Rotorblatt besitzt. Üblicherweise, aber nicht ausschließlich, sind drei Rotorblätter an einer Nabe vorgesehen. An dem Rotor ist wenigstens ein Belastungsmessmittel zum Erfassen einer Windbelastung des Rotors vorgesehen. Ein solches Belastungsmessmittel kann an dem Rotorblatt oder auch an einem Adapter zum Befestigen des Rotorblattes an der Rotornabe angeordnet sein. Dies sind bevorzugte Positionen. Es kommen aber auch andere Positionen, wie beispielsweise unmittelbar an der Nabe in Betracht. Dies hängt nicht zuletzt auch vom konkreten Aufbau des Rotors ab.

Eine solche Windenergieanlage dreht nun den Rotor ohne oder mit geringer Windbelastung zum Kalibrieren des Belastungsmessmittels. Dabei wird eine Belastungsmessung mit dem Belastungsmessmittel aufgenommen. Idealerweise liegt keine Windbelastung vor. Gleichwohl können geringe Windbelastungen vernachlässigbar sein oder gegebenenfalls rechentechnisch berücksichtigt werden. Dies hängt letztendlich auch von der gewünschten Qualität und Genauigkeit ab.

Basierend auf dieser Belastungsmessung und zusätzlich basierend auf vorbekannten, am Rotor auftretenden Gewichtskräften wird dann das Kalibrieren und des Belastungsmessmittels durchgeführt.

Hier liegt die Erkenntnis zugrunde, dass bei einem Horizontalachsenrotor auch das Gewicht der Rotorblätter und entsprechend auftretende Gewichtskräfte zu einer Belastung führen können, die das Belastungsmessmittel erfasst. Insbesondere kann davon ausgegangen werden, dass ein senkrecht stehendes Rotorblatt - also in Sechs-Uhr- oder Zwölf-Uhr-Position - praktisch keine Belastung durch eine Gewichtskraft erfährt, wohingegen die Belastung durch die Gewichtskräfte bei waagerechter Stellung des Rotorblattes - also in Drei-Uhr- oder Neun-Uhr-Position - maximal sein dürfte. Aufgrund der Belastungsmessung können so Nulldurchgänge erfasst und zugeordnet werden. Die Gewichtsbelastung eines Rotorblattes ist üblicherweise bekannt und so kann auch eine quantitative Zuordnung vorgenommen werden.

Vorzugsweise wird der Rotor zum Abgleichen desselben um wenigstens eine Umdrehung gedreht und hierbei wird ein Belastungsverlauf aufgenommen zusammen mit der jeweiligen Stellung des Rotors. Die Stellung des Rotors in Umlaufrichtung, also seine Position von 0 bis 360° wird dabei so aufgenommen, dass sie dem Belastungsverlauf zugeordnet werden kann. Der Belastungsverlauf umfasst also eine kontinuierliche oder quasi kontinuierliche Aufnahme der Belastung, so dass beispielsweise ein Belastungswert für jeden Winkelgrad in Drehbewegung des Rotors aufgenommen wird. In diesem Beispiel würden somit 360 Belastungswerte für eine Umdrehung aufgenommen. Das ist nur ein Beispiel und es können auch mehr oder weniger Werte z. B. 200 Inkremente aufgenommen werden. Insbesondere ist bei einer solchen Aufnahme eines Belastungsverlaufs, wenn dieser über die Winkelgradzahl der zugehörigen Drehposition aufgetragen wird, ein zumindest im Wesentlichen sinusförmiger Verlauf zu erwarten. Je nach vorhandenen Nichtlinearitäten im System können hierzu Abweichungen auftreten.

Ausgehend von einem solchen sinusförmigen, oder auch anders ausgestalteten Verlauf kann nun eine Zuordnung, eine Kalibrierung und schließlich ein Abgleich vorgenommen werden. Wie bereits ausgeführt sind die Nulldurchgänge bei 0° und 180° anzunehmen. Und die maximale Belastung ist dem Betrag nach bei 90° und 270° zu erwarten. Hierauf basierend können die Abweichungen zum zu erwartenden Verlauf erfasst werden, was als Kalibrierung bezeichnet wird, und entsprechende Korrekturwerte eingeführt werden, was als Abgleich bezeichnet wird.

Erläuterungen mit Formel

Vorteilhaft ist unter anderem, dass allein durch ein im Wesentlichen belastungsfreies Drehen des aerodynamischen Rotors ein Kalibrieren und/oder Abgleichen vorgenommen werden kann. Aufgrund der bautechnischen Zusammenhänge kann diese Kalibrierung und/oder dieser Abgleich auf die windbedingte Belastung übertragen werden.

Vorzugsweise wird der Abgleich bei Inbetriebnahme der Windenergieanlage und/oder nach einem Stillstand des Rotors und/oder zum Ende einer Wartung der Windenergieanlage durchgeführt. Wird eine Kalibrierung oder ein Abgleich auch nach einem Stillstand des Rotors, also bei einem Wiederanlaufen des Rotors vorgenommen, so ermöglich dies insbesondere, eine Kalibrierung bzw. einen Abgleich bei Inbetriebnahme zu überprüfen und gegebenenfalls anzupassen. Etwaige Veränderungen des Belastungsmessmittels oder anderer Parameter im Laufe der Zeit können somit auf einfache Weise berücksichtigt werden.

Windenergieanlagen unterliegen üblicherweise in regelmäßigen Abständen Wartungen, die üblicherweise auch ein Anhalten des Rotors erforderlich machen. Am Ende der Wartung wird der Rotor dann wieder angefahren und als eine Abschlusstätigkeit einer solchen Wartung kann somit auf einfache Weise die Kalibrierung und/oder der Abgleich überprüft und gegebenenfalls korrigiert oder erneuert werden.

Es ist anzumerken, dass das erfindungsgemäße und oben beschriebene Kalibrieren und/oder Abgleichen auch erfolgen kann, ohne dass der Rotor zum Stillstand gekommen war. Es sollte jedoch darauf geachtet werden, dass die vorgeschlagene Belastungsmessung jedenfalls ohne oder allenfalls mit geringer Windbelastung durchgeführt wird.

Günstig ist es, das Drehen des Rotors zum Abgleichen und/oder Kalibrieren in einem Trudelbetrieb durchzuführen. Unter einem Trudelbetrieb ist ein Betrieb zu verstehen, bei dem der aerodynamische Rotor durch insbesondere leichten Wind gedreht wird, aber ohne dass elektrische Energie erzeugt wird und damit ohne dass ein elektrisches Gegenmoment aufgebaut wird, gegen das der aerodynamische Rotor gedreht wird. Mit anderen Worten dreht sich der Rotor hierbei langsam im Leerlauf.

Vorzugsweise ist das wenigstens eine Rotorblatt verstellbar und wird insbesondere zum Durchführen der beschriebenen Belastungsmessung aus dem Wind gedreht, so dass keine oder wenig Energie dem Wind entnommen wird. Hierdurch kann zum einen auch bei mittlerem oder starkem Wind ein Trudelbetrieb durchgeführt werden. Sind die Belastungsmessmittel so angeordnet, dass sie beim Verstellen des Rotorblattes ebenfalls verstellt werden, so führt ein aus dem Wind drehen auch dazu, dass diese ganz oder teilweise in eine Richtung verdreht werden, in der sie die Gewichtskraft auf den Rotorblättern an Stelle einer Druckbelastung durch den Wind messen. Mit anderen Worten wirkt bei einem solchen Verstellen optimaler weise die Gewichtskraft in genau die Richtung, in die die Windkraft auf dem Rotorblatt wirkt, wenn dasselbe nicht aus dem Wind gedreht ist. Für die Belastungsmessung zur Kalibrierung und/oder zum Abgleich lässt sich somit der Einfluss des Windes, selbst wenn er vorhanden ist, minimieren und der Einfluss derbekannten - Gewichtskraft maximieren und somit mit hoher Genauigkeit die Belastungsmessung unter Berücksichtigung vorbekannter, am Rotor auftretender Gewichtskräfte durchführen.

Vorzugsweise wird als Belastungsmittel wenigstens ein Dehnungsmessstreifen verwendet, insbesondere zwei oder mehr Dehnungsmessstreifen für jedes Rotorblatt. Somit kann ein bewährtes Messmittel zum Erfassen von Blattbelastungen verwendet und auf einfache Weise kalibriert und/oder abgeglichen werden. Durch die Verwendung mehrerer Dehnungsmessstreifen können unterschiedliche Belastungsrichtungen berücksichtigt werden und/oder es können Redundanzmessungen vorgesehen sein.

Vorzugsweise ist das wenigstens eine Belastungsmessmittel an der Nabe, an einer Rotorblattwurzel und/oder an einem Blattadapter vorgesehen. Insbesondere die Verwendung an der Rotorblattwurzel, also dem der Nabe zugewandten Abschnitt des Rotorblattes, und auch die Anordnung an einem Blattadapter implizieren, dass bei Verwendung eines verdrehbaren Rotorblattes - also bei einer Anlage mit Pitch-Steuerung - das Messmittel mit verdreht wird und somit auf unterschiedliche Belastungsrichtungen eingestellt werden kann. Hierbei ist zu erwähnen, dass unter einem Blattadapter ein Adapter verstanden wird, der zwischen dem Rotorblatt und der Nabe, insbesondere zwischen der Rotorblattwurzel und der Nabe angeordnet ist. Mit anderen Worten wird das Rotorblatt mit seiner Rotorblattwurzel mittels des Blattadapters an der Nabe befestigt.

Erfindungsgemäß wird zudem eine Windenergieanlage vorgeschlagen, die dazu ausgebildet ist, eines oder mehrere der oben beschriebenen Verfahren auszuführen.

Es ist günstig, Ergebnisse des Kalibrierens also des Feststellens etwaiger Unterschiede zum Abgleichen des Belastungsmittels bzw. zum Abgleichen einer damit verbundenen Auswerteeinrichtung zu verwenden. Eine solche Auswerteeinrichtung kann auch in einem Prozessrechner integriert sein bzw. ein Prozessrechner kann die entsprechende Auswertung durchführen.

Sofern günstige Ausführungsformen des Kalibrierens bzw. damit zusammenhängende Merkmale beschrieben werden, sind diese grundsätzlich auch im Zusammenhang mit einem Abgleichen als günstig zu verstehen, ohne dass das jeweils ausdrücklich ausgeführt wird.

Vorzugsweise weist eine Windenergieanlage eines oder mehrere der Merkmale auf, die oben im Zusammenhang mit der Erläuterung des Verfahrens beschrieben wurde bzw. beschrieben wurden.

Nachfolgend wird die Erfindung anhand von Ausführungsformen unter Bezugnahme auf die begleitenden Figuren exemplarisch beschrieben.

Figur 1    zeigt schematisch einen Teil eines aerodynamischen Rotors einer Windenergieanlage in einer Draufsicht.

Figur 2    zeigt eine Windenergieanlage schematisch in einer Frontansicht aus Sicht der Windrichtung, wenn die Windenergieanlage bestimmungsgemäß zum Wind ausgerichtet ist.

Fig. 3a-c    zeigen schematisch eine Draufsicht auf eine Windenergieanlage gemäß der Figur 2, aber mit einer geänderten Rotorblattstellung und mit unterschiedlichen Pitch-Positionen.

Figur 4    zeigt schematisch eine aufgenommene Belastungsmessung zum Kalibrieren und/oder Abgleichen.

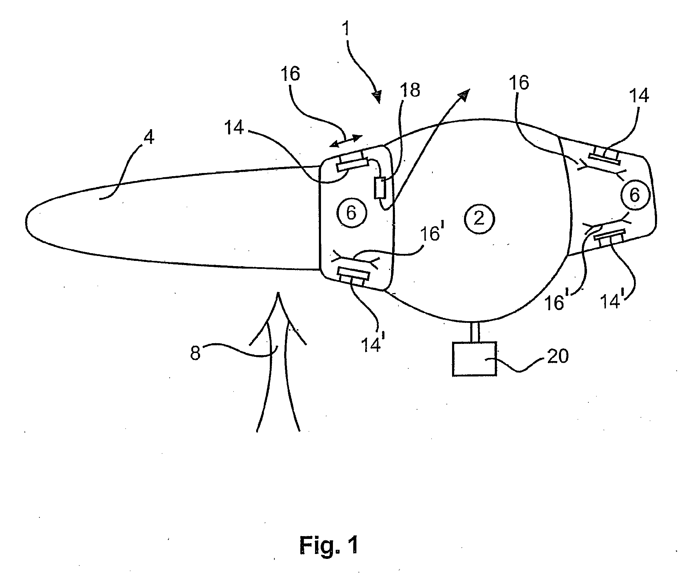

Die Draufsicht der Figur 1 zeigt einen Ausschnitt eines Rotors 1 mit einer Nabe 2 und einem Rotorblatt 4 von insgesamt drei Rotorblättern des Rotors 1. Das Rotorblatt 4 ist mittels eines Blattadapters 6 an der Nabe befestigt. Der Blattadapter 6 ist dabei drehbar an der Nabe 2 befestigt, um das Rotorblatt 4 in den Wind, aus dem Wind oder in eine Zwischenstellung zu drehen. Außerdem ist ein Windmessmittel 20 zum allgemeinen Messen des vorherrschenden Windes im Bereich der Nabe 2 dargestellt.

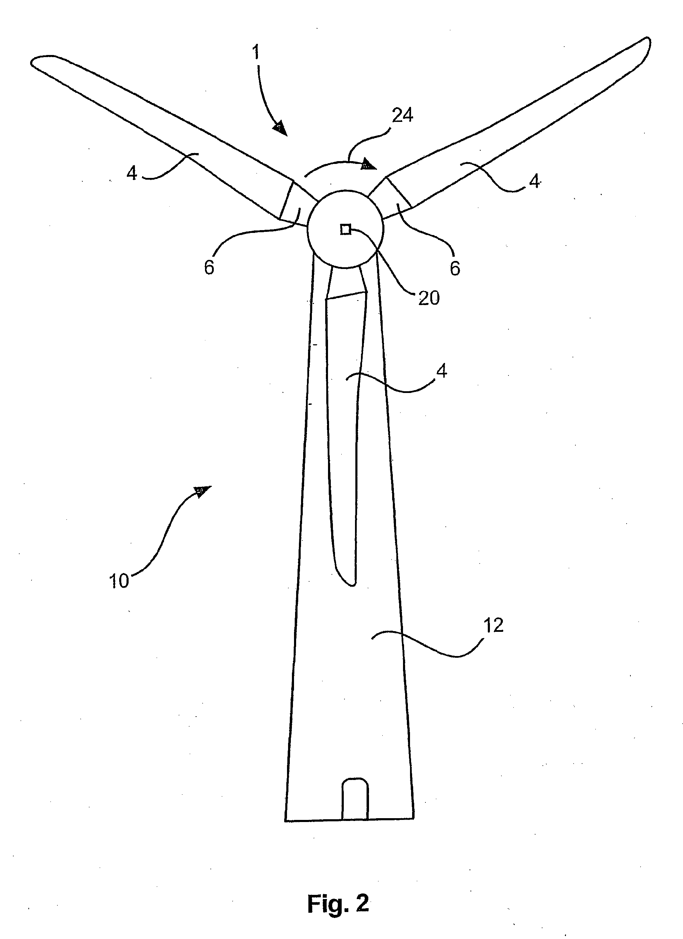

Mit dem Bezugszeichen 8 ist ein Pfeil gekennzeichnet, der die Windrichtung des bestimmungsgemäß auf das Rotorblatt wirkenden Windes angibt. Die Windrichtung entspricht dabei der Blickrichtung der Ansicht einer Windenergieanlage gemäß Figur 2. Figur 2 zeigt schematisch eine Gesamtansicht der Windenergieanlage 10 und zeigt dabei den aerodynamischen Rotor 1 mit allen drei Rotorblättern 4. Zusätzlich ist der Windenergieanlagenturm 12 dargestellt.

Figur 1 zeigt somit eine Draufsicht auf die Windenergieanlage 10 gemäß Figur 2.

Der Figur 1 ist zudem am Blattadapter 6 ein Dehnungsmessstreifen 14 zu entnehmen, der als Belastungsmessmittel fungiert. Ein Doppelpfeil illustriert Belastungsrichtungen 16, die mittels des Dehnungsmessstreifens 14 erfasst werden können. Wenn mit dem Dehnungsmessstreifen 14 in der Belastungsrichtung 16 eine Stauchung gemessen wird, dürfte mit dem Dehnungsmessstreifen 14' eine Streckung für die Belastungsrichtung 16' erfasst werden, sofern gleicher Wind vorausgesetzt wird. Dehnungsmessstreifen 14 und 14' können an jedem Rotorblatt 4 oder Blattadapter 6 angeordnet sein. Mit anderen Worten kann der Dehnungsmessstreifen sowohl Streckungen als auch Stauchungen und damit Belastungen des Rotorblattes in positiver und negativer Richtung erfassen. Üblicherweise ist einem unbelasteten Fall des Rotorblattes 4 ein Wert Null zugeordnet. Bei einem auf das Rotorblatt 4 wirkenden Wind wird das Rotorblatt in Richtung des Windes 8 belastet und gibt auch in diese Richtung der Belastung etwas nach. Dies führt zu einer Stauchung in dem windabgewandten Bereich und damit auch einer Stauchung des Dehnungsmessstreifens 14 gemäß der vorliegenden Darstellung. Diese Stauchung kann mittels einer Auswerteeinheit 18, die hier nur schematisch dargestellt ist, ausgewertet werden und es kann sich eine weitere Berücksichtigung der Ergebnisse anschließen. Je nach Ausführungsform kann es ausreichend sein, nur einen Dehnungsstreifen oder anderen Messsensor pro Rotorblatt vorzusehen.

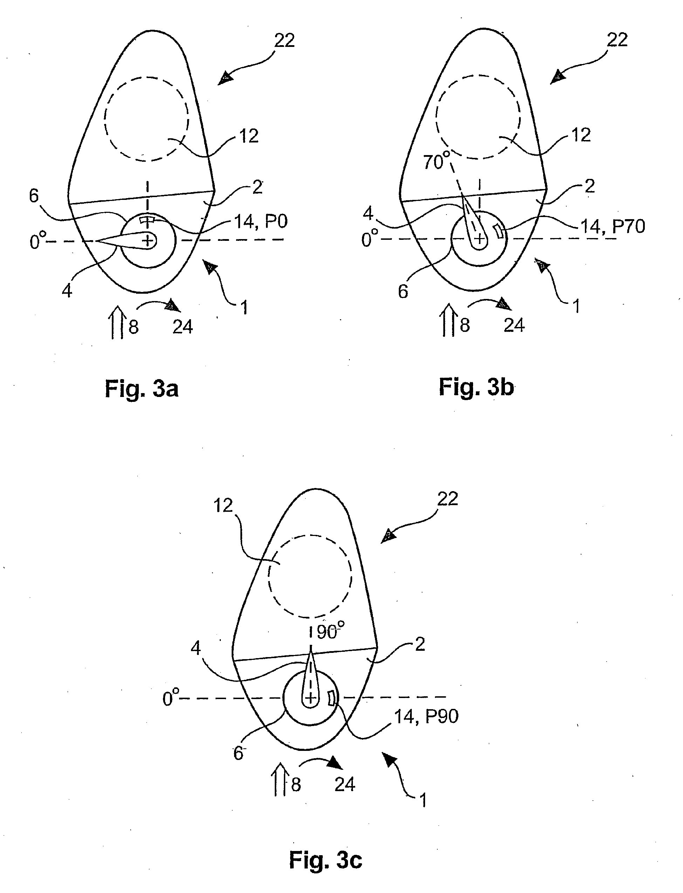

Figuren 3a-c zeigen schematisch eine Draufsicht auf eine Windenergieanlage gemäß der Figur 2, aber mit einer geänderten Rotorblattstellung. Figuren 3a-c zeigen dabei eine Gondel 22, die zur besseren Übersicht in der Figur 1 nicht dargestellt ist. Zudem ist zum besseren Verständnis der Turm 12 in den Figuren 3a-c angedeutet, der natürlich aufgrund der gewählten Draufsicht durch die Gondel 22 verdeckt ist und hier nur zur Erhöhung des Verständnisses gestrichelt gezeichnet wurde. An der Nabe 2, die als Teil der Gondel 22 betrachtet werden kann, jedenfalls hinsichtlich der gezeigten Abdeckung, die auch Spinner genannt wird, ist ein Rotorblatt 4 in drei sogenannten Pitchpositionen gezeigt, eine Position je Figur. Der Rotor 1 befindet sich hierbei in einer Position, bei der das gezeigte Rotorblatt 4 senkrecht nach oben steht. Es ist also eine sogenannte 12-Uhr-Position dargestellt. Die weiteren Rotorblätter 4 werden hier zur Erläuterung nicht benötigt und sind daher nicht dargestellt. Figur 3a zeigt dabei das eine Rotorblatt 4 in einer Ausrichtung relativ zum Wind mit einem Pitchwinkel von 0°. Die erste Position bei dem Pitchwinkel von 0° kann - je nach Betrachtungsweise - auch als ungepitchte Position bezeichnet werden. Hierbei ist das Rotorblatt 4 so in den Wind 8 gedreht, dass maximale Energie aus dem Wind entnommen werden kann. Bei entsprechend vorherrschendem Wind dreht sich die Nabe 2 und damit der Rotor 1 insgesamt in die Drehrichtung 24. Die auf das Rotorblatt 4 bedingt durch den Wind 8 auftretende Belastung kann mittels des Dehnungsmessstreifens 14 erfasst werden. Bei dieser Pitchstellung von 0° befindet sich der Dehnungsmessstreifen 14 in einer so gekennzeichneten P0-Stellung. Er ist hierbei gut geeignet, die durch den Wind 8 auftretende Belastung auf das Rotorblatt 4 zu erfassen.

Figur 3b zeigt das eine Rotorblatt 4 in einer Ausrichtung relativ zum Wind mit einem Pitchwinkel von 70°. In dieser Pitchstellung bietet das Rotorblatt 4 dem Wind 8 kaum noch Widerstand und der Wind 8 kann somit keine oder allenfalls eine geringe Belastung auf das Rotorblatt 4 ausüben. Allenfalls könnte sich ein Trudelbetrieb der Windenergieanlage einstellen. Durch die Verdrehung des Rotorblattes 4 in die 70°-Stellung ist auch der Dehnungsmessstreifen 14 in einer als P70 gekennzeichneten Position. Der Dehnungsmessstreifen 14 kann in dieser P70-Position kaum noch eine Belastung des Rotorblattes 4 durch den Wind 8 erfassen, zumal der Wind hierbei kaum eine Belastung auf das Rotorblatt 4 ausüben kann. Zur Vervollständigung zeigt Figur 3c eine Pitch-Position von 90°.

Gleichwohl kann in der gezeigten P70-Stellung des Dehnungsmessstreifens 14 ein Eigengewichtsmoment des Rotorblattes erfasst werden. Dieses Eigengewichtsmoment ist dabei nicht oder nicht wesentlich durch eine etwaige Windbelastung verfälscht. In der dargestellten senkrechten Position des Rotorblattes ist die Gewichtskraft bzw. Gewichtsmoment am Sensor bzw. Dehnungsstreifen 14 allerdings Null. Dreht sich der Rotor 1 in die Drehrichtung 24 weiter, so nimmt die Gewichtskraft kontinuierlich zu, bis sich der Rotor um 90° weitergedreht hat. Hierbei ist die Rotordrehbewegung 24 gemeint, die auch in der Frontansicht der Figur 2 dargestellt ist und nicht zu verwechseln ist mit der Pitchstellung, die in den Figuren 3a-c veranschaulicht ist. Steht das betreffende Rotorblatt 4 waagerecht, also bezogen auf den Turm 12 quer ab, was auch als 3-Uhr-Stellung bezeichnet wird, so ist die Belastung maximal. Nach weiteren 90°, wenn das betreffende Rotorblatt 4 quasi senkrecht herunterhängt, wie das für ein Rotorblatt 4 in der Figur 2 dargestellt ist, ist die Gewichtsbelastung, die von dem Dehnungsmessstreifen 14 erfasst werden kann, Null. Bei einer weiteren Drehung in Drehrichtung 24 um 90° in die 9 Uhr-Stellung, ist die von dem Dehnungsmessstreifen 14 erfasste Belastung durch die Gewichtskraft maximal, bezogen auf die 3 Uhr-Stellung aber mit umgekehrten Vorzeichen.

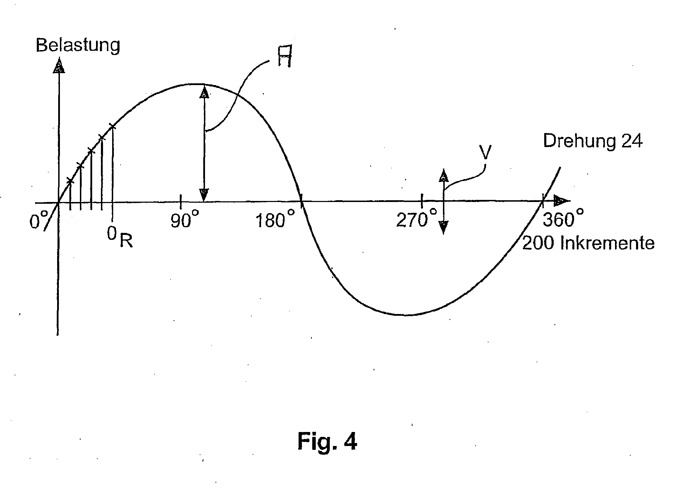

Bei einer vollständigen Umdrehung des Rotors 1 nimmt der Dehnungsmessstreifen 14 somit eine sinusförmige Belastungskurve auf, die in Figur 4 veranschaulicht ist. Bei 0 und 360°, die der 12-Uhr-Stellung entsprechen, und bei 180°, was der 6-Uhr-Stellung entspricht, ist die Belastung Null, sofern das Messmittel, nämlich der Dehnungsmessstreifen 14 zusammen mit seiner Auswerteeinheit korrekt abgeglichen ist. Die Position des Rotors wird aber gemäß der gezeigten Ausführungsform mittels eines Inkrementalgebers 20 miterfasst, was beispielsweise durch eine Aufteilung einer Umdrehung in 200 Inkremente geschehen kann.

Eine Möglichkeit eines Abgleiches besteht darin, eine Messreihe von Messwerten des Belastungsmessmittels über wenigstens eine vollständige Umdrehung aufzunehmen. So können bspw. über eine Umdrehung bspw. 200 Messungen Rn mit dem Belastungsmessmittel mit n = 0-199 zu gleichmäßigen Abständen aufgenommen werden. Aus den 200 Messwerten Rn kann ergibt sich, bei bekanntem Gewicht, bzw. bekannter Gewichtsbelastung A des betreffenden Rotorblatts, der folgende Zusammenhang:

$$A = k1 \sum_{n=0}^{199} |R_n|$$

Der Wert A ist als Amplitude in dem Graph der Figur 4 eingezeichnet. Der Koeffizient $k_1$ lässt sich somit aus bekanntem Wert A und den Messungen Rn bestimmen. Durch die Betragsbildung der Messwerte Rn einer Umdrehung oder mehrerer vollständiger Umdrehungen mitteln sich etwaige Verschiebungen relativ zur Nulllinie heraus. In einem zweiten Durchlauf oder einem zweiten Auswertungsschritt kann die Verschiebung V bestimmt werden, die die Verschiebung der Messkurve relativ zur Nulllinie angibt:

$$V = k2 \sum_{n=0}^{199} R_n$$

Der Koeffizient $K_2$ lässt sich durch Vergleichsmessungen ermitteln oder aus bekannten Zusammenhängen wie der Kreisverstärkung des Regalsystems bestimmen. In die Koeffizienten $k_1$ und $k_2$ geht auch die Anzahl der aufgenommenen Messwerte ein.

Bei dieser Berechnung erfolgt somit wieder eine Summenbindung, aber ohne vorherige Betragsbildung, so dass die Verschiebung V bestimmt werden kann. Diese Verschiebung V ist in der Figur 4 durch einen entsprechenden Doppelpfeil angedeutet.

So kann durch langsames Trudeln der Anlage vor dem eigentlichen Start die Empfindlichkeit und der Nullpunkt der Lastmessung bestimmt werden. Hierzu werden die Messwerte pro Umdrehung aufgezeichnet. Diese entsprechen dem Blattgewicht. Da das Blattgewicht bekannt ist, kann die Empfindlichkeit des Sensors, also des Belastungsmessmittels, insbesondere des Dehnungsmessstreifens kalibriert werden. Der Nullpunkt kann auch anhand der Ermittlung der Werte bestimmt werden.

Somit ist optimaler Weise kein Abgleich manuell mehr erforderlich und eine Drift der Messung über einen langen Zeitraum wird automatisch kompensiert. Ein automatischer Abgleich der Lastmessung bei jedem Anlagenstart ist somit möglich. Insbesondere wird das Problem einer Drift von Offset und Empfindlichkeit der Messung bei vorbekannten Verfahren gelöst, zumindest adressiert und verringert.

Durch ein aus dem Wind gedrehtes Rotorblatt, also bei einer starken Veränderung des Pitchwinkels, kann somit gleichzeitig der Dehnungsmessstreifen 14 an eine Messung einer Belastung durch die Gewichtskraft des Rotorblattes 4 angepasst werden. Mit anderen Worten wirkt die Gewichtskraft in eine andere Richtung als die Windkraft, was durch die Veränderung der Position des Belastungsmessmittels beim Drehen des Rotorblattes 4 aus dem Wind mitberücksichtigt wird. Die Position des Belastungsmessmittels wird somit an die jeweils wirkende Kraftrichtung angepasst. Insoweit diese Richtungsanpassung nicht vollständig erfolgt, weil beispielsweise beim Pitchen das Rotorblatt nur um 70°, nicht aber um 90° verändert wird, kann dies aufgrund der geometrischen Zusammenhänge rechnerisch berücksichtigt werden, zumal der jeweils eingestellte Pitchwinkel üblicherweise der Auswerteeinheit des Belastungsmessmittels zur Verfügung steht oder zur Verfügung gestellt werden kann.

**Patentansprüche**

**1.** Verfahren zum Betreiben einer Windenergieanlage, wobei

- die Windenergieanlage einen als Horizontalachsenrotor ausgebildeten aerodynamischen Rotor mit einer Nabe mit wenigstens einem Rotorblatt aufweist,
- und an dem Rotor wenigstens ein Belastungsmessmittel zum Erfassen einer Windbelastung des Rotors vorgesehen ist,

das Verfahren umfasst die Schritte:

- Drehen des Rotors der Windenergieanlage ohne oder mit geringer Windbelastung zum Kalibrieren des Belastungsmessmittels und dabei Aufnehmen einer Belastungsmessung mit dem Belastungsmessmittel,
- Kalibrieren des Belastungsmessmittels basierend auf der Belastungsmessung und vorbekannten, am Rotor auftretenden Gewichtskräften,

**dadurch gekennzeichnet, dass** in einem ersten Durchlauf mittels des Belastungsmessmittels über eine vollständige Drehung oder mehrere vollständige Drehungen des Rotors eine Messreihe mit mehreren Messungen aufgenommen wird und die Beträge der Messungen der Messreihe aufsummiert werden, wobei aus einer der bekannten Gewichtskräfte und den aufsummierten Beträgen der Messungen der Messreihe eine Empfindlichkeit des Belastungsmessmittels bestimmt wird.

**2.** Verfahren nach Anspruch 1, **dadurch gekennzeichnet, dass** in einem zweiten Durchlauf oder einem zweiten Auswertungsschritt die aufgenommenen Messungen ohne vorherige Betragsbildung aufsummiert werden und daraus eine Verschiebung der Messreihe zur Nulllinie bestimmt wird.

**3.** Verfahren nach Anspruch 1 oder 2, **dadurch gekennzeichnet, dass** im Anschluss an das Kalibrieren oder zusammen damit ein Abgleich des Belastungsmessmittels oder einer zugeordneten Auswerteeinrichtung durchgeführt wird.

**4.** Verfahren nach einem der vorstehenden Ansprüche, **dadurch gekennzeichnet, dass** beim Drehen des Rotors zum Kalibrieren der Rotor um wenigstens eine Umdrehung gedreht wird und dass dabei die Belastungsmessung so durchgeführt wird, dass ein Belastungsverlauf gemessen wird und dass gleichzeitig die Stellung des Rotors erfasst wird.

**5.** Verfahren nach einem der vorstehenden Ansprüche, **dadurch gekennzeichnet, dass** das Kalibrieren bei Inbetriebnahme der Windenergieanlage und/oder nach einem Stillstand des Rotors und/oder zum Ende einer Wartung der Windenergieanlage durchgeführt wird.

6. Verfahren nach einem der vorstehenden Ansprüche, **dadurch gekennzeichnet, dass** das Drehen des Rotors zum Abgleich in einem Trudelbetrieb durchgeführt wird.

7. Verfahren nach einem der vorstehenden Ansprüche, **dadurch gekennzeichnet, dass** das wenigstens eine Rotorblatt verstellbar ist und beim Drehen zum Kalibrieren aus dem Wind gedreht wird, so dass keine oder wenig Energie dem Wind entnommen wird.

8. Verfahren nach einem der vorstehenden Ansprüche, **dadurch gekennzeichnet, dass** als Belastungsmessmittel wenigstens ein Dehnungsmessstreifen verwendet wird, vorzugsweise zwei oder mehr Dehnungsmessstreifen für jedes Rotorblatt verwendet werden.

9. Verfahren nach einem der vorstehenden Ansprüche, **dadurch gekennzeichnet, dass** das wenigstens eine Belastungsmessmittel an der Nabe, an einer Rotorblattwurzel und/oder an einem Blattadapter zum Befestigen des wenigstens einen Rotorblattes an der Nabe angeordnet ist.

10. Windenergieanlage, umfassend

     - einen als Horizontalachsenrotor ausgebildeten aerodynamischen Rotor mit einer Nabe mit wenigstens einem Rotorblatt,
     - und wenigstens ein an dem Rotor angeordnetes Belastungsmessmittel zum Erfassen einer Windbelastung des Rotors, wobei die Windenergieanlage dazu vorbereitet ist, den Rotor der Windenergieanlage ohne oder bei geringer Windbelastung zum Kalibrieren des Belastungsmessmittels zu drehen und dabei eine Belastungsmessung mit dem Belastungsmessmittel aufzunehmen, und das Belastungsmessmittel basierend auf der Belastungsmessung und vorbekannten, am Rotor auftretenden Gewichtskräften zu kalibrieren,

**dadurch gekennzeichnet, dass** in einem ersten Durchlauf mittels des Belastungsmessmittels über eine vollständige Drehung oder mehrere vollständige Drehungen des Rotors eine Messreihe mit mehreren Messungen aufgenommen wird und die Beträge der Messungen der Messreihe aufsummiert werden, wobei aus einer der bekannten Gewichtskräfte und den aufsummierten Beträgen der Messungen der Messreihe eine Empfindlichkeit des Belastungsmessmittels bestimmt wird.

11. Windenergieanlage nach Anspruch 10, **dadurch ge-**

**kennzeichnet, dass** in einem zweiten Durchlauf oder einem zweiten Auswertungsschritt die aufgenommenen Messungen ohne vorherige Betragsbildung aufsummiert werden und daraus eine Verschiebung der Messreihe zur Nulllinie bestimmt wird.

12. Windenergieanlage nach Anspruch 10 oder 11, **dadurch gekennzeichnet, dass** als Belastungsmessmittel wenigstens ein Dehnungsmessstreifen vorgesehen ist, vorzugsweise ein, zwei oder mehr Dehnungsmessstreifen für jedes Rotorblatt vorgesehen sind.

13. Windenergieanlage nach einem der Ansprüche 10 bis 12, **dadurch gekennzeichnet, dass** das wenigstens eine Belastungsmessmittel an der Nabe, an einer Rotorblattwurzel und/oder an einem Blattadapter zum Befestigen des wenigstens einen Rotorblattes an der Nabe angeordnet ist.

14. Windenergieanlage nach einem der Ansprüche 10 bis 13, **dadurch gekennzeichnet, dass** sie dazu vorbereitet ist, ein Verfahren nach einem der Ansprüche 1 bis 9 durchzuführen.

## Claims

1. Method for operating a wind turbine, wherein

     - the wind turbine has an aerodynamic rotor which is constructed as a horizontal axis rotor and which has a hub having at least one rotor blade,
     - and at least one load measurement means is provided on the rotor for detecting a wind load of the rotor,

the method comprises the steps of:

     - rotating the rotor of the wind turbine without a wind load or with a small wind load in order to calibrate the load measurement means, and receiving a load measurement with the load measurement means,
     - calibrating the load measurement means based on the load measurement and previously known weight forces which occur on the rotor,

**characterised in that**,
in a first passage using the load measurement means over a complete revolution or a plurality of complete revolutions of the rotor, a series of measurements with a plurality of measurements is recorded and the values of the measurements of the series of measurements is totalled, a sensitivity of the load measurement means being determined from one of the known weight forces and the totalled values of the measurements of the series of measurements.

2. Method according to claim 1, **characterised in that**, in a second passage or a second evaluation step, the measurements recorded are totalled without prior formation of the value and a displacement of the measurement series with respect to the zero line is determined therefrom.

3. Method according to claim 1 or claim 2, **characterised in that**, following the calibration or together therewith, an alignment of the load measurement means or an associated evaluation device is carried out.

4. Method according to any one of the preceding claims, **characterised in that** the rotor is rotated by at least one revolution when the rotor is rotated for calibration, and **in that** the load measurement is carried out in such a manner in this instance that a load progression is measured, and **in that** the position of the rotor is detected at the same time.

5. Method according to any one of the preceding claims, **characterised in that** the calibration is carried out when the wind turbine is started and/or after a stoppage of the rotor and/or at the end of a maintenance operation of the wind turbine.

6. Method according to any one of the preceding claims, **characterised in that** the rotation of the rotor for alignment is carried out during coasting operation.

7. Method according to any one of the preceding claims, **characterised in that** the at least one rotor blade can be adjusted and during rotation is rotated out of the wind for calibration so that no or little energy is taken from the wind.

8. Method according to any one of the preceding claims, **characterised in that** at least one expansion measurement strip is used as a load measurement means, preferably two or more expansion measurement strips are used for each rotor blade.

9. Method according to any one of the preceding claims, **characterised in that** the at least one load measurement means is arranged on the hub, on a rotor blade root and/or on a blade adapter for securing the at least one rotor blade to the hub.

10. Wind turbine, comprising:

    - an aerodynamic rotor which is constructed as a horizontal axis rotor and which has a hub having at least one rotor blade,
    - and at least one load measurement means which is arranged on the rotor for detecting a wind load of the rotor, the wind turbine being provided to rotate the rotor of the wind turbine without a wind load or with a small wind load in order to calibrate the load measurement means and to receive a load measurement with the load measurement means, and to calibrate the load measurement means based on the load measurement and previously known weight forces which occur on the rotor,

**characterised in that**

in a first passage using the load measurement means over a complete revolution or a plurality of complete revolutions of the rotor, a series of measurements with a plurality of measurements is recorded and the values of the measurements of the series of measurements is totalled, a sensitivity of the load measurement means being determined from one of the known weight forces and the totalled values of the measurements of the series of measurements.

11. Wind turbine according to claim 10, **characterised in that**, in a second passage or a second evaluation step, the measurements recorded are totalled without prior formation of the value and a displacement of the measurement series with respect to the zero line is determined therefrom.

12. Wind turbine according to claim 10 or claim 11, **characterised in that** at least one expansion measurement strip is provided as a load measurement means, preferably one, two or more expansion measurement strips is/are provided for each rotor blade.

13. Wind turbine according to any one of claims 10 to 12, **characterised in that** the at least one load measurement means is arranged on the hub, on a rotor blade root and/or on a blade adapter for securing the at least one rotor blade to the hub.

14. Wind turbine according to any one of claims 10 to 13, **characterised in that** it is provided to carry out a method according to any one of claims 1 to 9.


**Revendications**

1. Procédé servant à faire fonctionner une éolienne, sachant

    - que l'éolienne présente un rotor aérodynamique réalisé sous la forme d'un rotor à axe horizontal et pourvu d'un moyeu doté d'au moins une pale de rotor,
    - et qu'au moins un moyen de mesure de contraintes servant à détecter une contrainte exercée par le vent sur le rotor est prévu au niveau du rotor,

lequel procédé comprend les étapes suivantes consistant à :

- faire tourner le rotor de l'éolienne sans ou avec une faible exposition aux contraintes liées au vent, aux fins de l'étalonnage du moyen de mesure de contraintes, et enregistrer dans ce cadre une mesure de contrainte à l'aide du moyen de mesure de contraintes,
- étalonner le moyen de mesure de contraintes sur la base de la mesure de contraintes et des forces liées au poids connues au préalable, apparaissant sur le rotor,

**caractérisé en ce qu'**une série de mesures comprenant plusieurs mesures est enregistrée lors d'un premier passage au moyen du moyen de mesure de contraintes sur un tour complet ou plusieurs tours complets du rotor, et en ce que les valeurs des mesures de la série de mesures sont additionnées, sachant qu'on détermine une sensibilité du moyen de mesure de contraintes à partir d'une des forces liées au poids connues et des valeurs additionnées des mesures de la série de mesures.

2. Procédé selon la revendication 1, **caractérisé en ce que** les mesures enregistrées sont additionnées lors d'un deuxième passage ou d'une deuxième étape d'analyse sans obtention préalable de valeurs, et **en ce qu'**on détermine à partir de cela un décalage de la série de mesures vers la courbe zéro.

3. Procédé selon la revendication 1 ou 2, **caractérisé en ce qu'**une compensation du moyen de mesure de contraintes ou d'un système d'analyse associé est effectuée directement après l'étalonnage ou en même temps.

4. Procédé selon l'une quelconque des revendications précédentes, **caractérisé en ce que** le rotor est tourné, lors de la rotation du rotor aux fins de l'étalonnage, d'au moins un tour, et **en ce que** dans ce cadre la mesure des contraintes est mise en oeuvre de telle manière qu'une variation des contraintes est mesurée et que la position du rotor est détectée dans le même temps.

5. Procédé selon l'une quelconque des revendications précédentes, **caractérisé en ce que** l'étalonnage est effectué lors d'une mise en service de l'éolienne et/ou à l'issue d'une mise à l'arrêt du rotor et/ou à la fin d'une maintenance de l'éolienne.

6. Procédé selon l'une quelconque des revendications précédentes, **caractérisé en ce que** la rotation du rotor est mise en oeuvre aux fins de la compensation en mode vrille.

7. Procédé selon l'une quelconque des revendications précédentes, **caractérisé en ce que** l'au moins une pale de rotor peut être réglée et est tournée de manière à être à l'abri du vent lors de la rotation aux fins de l'étalonnage de sorte qu'aucune énergie ou une faible quantité d'énergie peut être prélevée du vent.

8. Procédé selon l'une quelconque des revendications précédentes, **caractérisé en ce qu'**on utilise comme moyen de mesure de contraintes au moins une jauge extensométrique, de préférence deux jauges extensométriques ou plus pour chaque pale de rotor.

9. Procédé selon l'une quelconque des revendications précédentes, **caractérisé en ce que** l'au moins un moyen de mesure de contraintes est disposé au niveau du moyeu, au niveau d'une racine de pale de rotor et/ou au niveau d'un adaptateur de pale servant à fixer l'au moins une pale de rotor au niveau du moyeu.

10. Eolienne, comprenant

- un rotor aérodynamique réalisé sous la forme d'un rotor à axe horizontal, pourvu d'un moyeu doté d'au moins une pale de rotor,
- et au moins un moyen de mesure de contraintes disposé au niveau du rotor servant à détecter une contrainte exercée par le vent sur le rotor, sachant que l'éolienne est préalablement préparée pour faire tourner le rotor de l'éolienne sans contrainte liée au vent ou avec une légère contrainte liée au vent aux fins de l'étalonnage du moyen de mesure de contraintes et pour dans ce cadre enregistrer une mesure de contrainte à l'aide du moyen de mesure de contraintes, et pour étalonner le moyen de mesure de contraintes sur la base de la mesure de contraintes et de forces liées au poids préalablement connues, apparaissant sur le rotor,

**caractérisée en ce qu'**une série de mesures comprenant plusieurs mesures est enregistrée lors d'un premier passage au moyen du moyen de mesure de contraintes sur un tour complet ou sur plusieurs tours complets du rotor, et en ce que les valeurs des mesures de la série de mesures sont additionnées, sachant qu'on détermine, à partir d'une des forces liées au poids connues et des valeurs des mesures additionnées de la série de mesures, une sensibilité du moyen de mesure de contraintes.

**11.** Eolienne selon la revendication 10, **caractérisée en ce que** les mesures enregistrées sont additionnées lors d'un deuxième passage ou d'une deuxième étape d'analyse sans obtention préalable de valeurs, et **en ce qu'**on détermine sur cette base un décalage de la série de mesures vers la courbe zéro.

**12.** Eolienne selon la revendication 10 ou 11, **caractérisée en ce qu'**on prévoit, en tant que moyen de mesure de contraintes, au moins une jauge extensométrique, de préférence une, deux jauges extensométriques ou plus pour chaque pale de rotor.

**13.** Eolienne selon l'une quelconque des revendications 10 à 12, **caractérisée en ce que** l'au moins un moyen de mesure de contraintes est disposé au niveau du moyeu, au niveau d'une racine de pale rotor et/ou au niveau d'un adaptateur de pale servant à fixer l'au moins une pale de rotor au niveau du moyeu.

**14.** Eolienne selon l'une quelconque des revendications 10 à 13, **caractérisée en ce qu'**elle est préparée afin de mettre en oeuvre un procédé selon l'une quelconque des revendications 1 à 9.

**Fig. 1**

**Fig. 2**

**Fig. 3a**

**Fig. 3b**

**Fig. 3c**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006036157 A1